# EUROPÄISCHE PATENTSCHRIFT

(11) **EP 2 435 802 B1**
(45) Veröffentlichungstag und Bekanntmachung des Hinweises auf die Patenterteilung: **08.07.2015**
(21) Anmeldenummer: 10730347.1
(22) Anmeldetag: 26.05.2010
(51) Int. Cl.: G01F 15/14

(54) **VERBRAUCHSZÄHLER FÜR FLÜSSIGE ODER GASFÖRMIGE MEDIEN**
UTILITY METER FOR LIQUID OR GASEOUS MEDIA
COMPTEUR DE CONSOMMATION POUR MILIEUX LIQUIDES OU GAZEUX

(30) Priorität: 26.05.2009 DE 102009025865
(43) Veröffentlichungstag der Anmeldung: 04.04.2012
(73) Patentinhaber: Zenner International GmbH & Co. KG, 66121 Saarbrücken (DE)
(72) Erfinder: CALMES, Manfred, 66663 Merzig-Mondorf (DE)
(74) Vertreter: Vièl, Christof
(86) Internationale Anmeldenummer: PCT/DE2010/075043
(87) Internationale Veröffentlichungsnummer: WO 2010/136030

(56) Entgegenhaltungen:
- CH-A5- 696 981
- DE-A1- 19 746 153
- US-A- 4 519 516
- US-A- 4 730 745

## Beschreibung

Die Erfindung betrifft einen Verbrauchszähler für flüssige oder gasförmige Medien, der ein Gehäuseoberteil und ein damit verbindbares Gehäuseunterteil aufweist, wobei dem Verbrauchszähler eine individuelle, gerätespezifische Kennzeichnung zugeordnet ist und an dem Verbrauchszähler ein die Kennzeichnung tragender, ursprünglich separater, unlösbar bzw. gegen ein nachträgliches unbeabsichtigtes Entfernen gesichert von außen am fertig montierten Verbrauchszähler über eine schnappbare Formschlußverbindung befestigter Kennzeichnungsring angeordnet ist.

Verbrauchszähler dieser Art sind als Wasser- oder Gaszähler bekannt. In der Regel werden das Gehäuseoberteil und das Gehäuseunterteil durch eine Schraub- oder Rastverbindung miteinander verbunden. Um Manipulationen an dem Verbrauchszähler zu verhindern, sind das Gehäuseoberteil und das Gehäuseunterteil durch eine Verplombung gesichert. Auf dem Gehäuseoberteil oder auf dem Gehäuseunterteil ist jeweils die Kennzeichnung des Verbrauchszählers angebracht, mit der der Verbrauchszähler identifiziert werden kann.

Aus der CH 696 981 A5 ist eine Plombiereinrichtung an einem Durchflußzähler für Fluide bekannt, bei der ein Plombenelement, das eine Trennstelle mit einem Einmalverschluß und an einem etwa radial gegenüberliegenden Bereich ein Scharnier aufweist, Teilbereiche des ersten und des zweiten Gehäuses, die gegeneinander verdrehbar sind, im Bereiche der Verbindung zwischen dem ersten und dem zweiten Gehäuse umschließt.

Aus der DE 197 46 153 C2 ist ein Wasserzähler bestehend aus einem Zählergehäuse und einem darin untergebrachten Meßwerk mit durch eine Sichtscheibe ablesbaren Anzeigemitteln bekannt, wobei dem Zählergehäuse eine individuelle, gerätespezifische Kennzeichnung zugeordnet ist und ein die Kennzeichnung tragendes, ursprünglich separates, unlösbar bzw. gegen ein nachträgliches unbeabsichtigtes Entfernen gesichert von außen am fertig montierten Wasserzähler über eine schnappbare Formschlußverbindung befestigtes Kennzeichnungsteil vorgesehen ist. Das Kennzeichnungsteil ist hierbei ringförmig zur Befestigung am Ringkragen des Schraubrings der Sichtscheibe ausgebildet.

Diese Vorgehensweise ist insofern vorteilhaft, als ein Entfernen des Kennzeichnungsteils und somit auch der spezifischen Kennzeichnung nur durch Zerstörung des Kennzeichnungsteils möglich ist und somit ein Fälschungs- bzw. Täuschungsversuch nachweisbar ist. Somit ist es möglich, Wasserzähler auch schon ohne konkrete Bestellung und Vorgabe von Wunschkennzeichnungen praktisch "auf Halde" fertig zu produzieren. Dies kann somit zu nahezu beliebigen Zeiten erfolgen, so daß auch Zeiten mit geringer Auftragslage ausgenutzt werden können bzw. starke Nachfragen durch Abbau der Lagerbestände kurzfristig befriedigt werden können. Die so produzierten bzw. komplett montierten Zähler können dann auch sofort geeicht und geprüft werden; jeder Zähler erhält dazu eine provisorische, werksinteme Vorkennzeichnung, die dann dem jeweiligen Prüfprotokoll zugeordnet wird. Geht dann nachfolgend eine Bestellung mit Vorgabe von bestimmten Kennzeichnungen ein, so brauchen diese vorgegebenen Kennzeichnungen nur noch auf jeweils einen Kennzeichnungsteil aufgebracht zu werden und an jedem bereits vollständig montierten und geeichten Zähler wird dann eines der Kennzeichnungsteile von außen unlösbar befestigt.

Aufgabe der Erfindung ist es, einen derartigen Verbrauchszähler für flüssige oder gasförmige Medien weiterzubilden.

Diese Aufgabe wird erfindungsgemäß dadurch gelöst, daß das Gehäuseoberteil einen umlaufenden Kragen aufweist, in welchen der über das Gehäuseunterteil geschobene und an diesem formschlüssig anliegende Kennzeichnungsring eingerastet ist.

Die Aufgabe wird ebenfalls dadurch gelöst, daß das Gehäuseunterteil einen umlaufenden Kragen aufweist, in welchen der über das Gehäuseoberteil geschobene und an diesem formschlüssig anliegende Kennzeichnungsring eingerastet ist.

Bei beiden Varianten der Erfindung werden das Gehäuseoberteil und das Gehäuseunterteil miteinander verbunden, beispielsweise durch Verschrauben. Anschließend wird ein Kennzeichnungsring über das Gehäuseunterteil bzw. das Gehäuseoberteil geschoben, bis er an dem Gehäuseunterteil bzw. dem Gehäuseoberteil formschlüssig anliegt. Gleichzeitig rastet der Kennzeichnungsring in dem Kragen des Gehäuseoberteils bzw. des Gehäuseunterteil ein und sichert auf diese Weise die Verbindung zwischen dem Gehäuseoberteil und dem Gehäuseunterteil, so daß ein Trennen von Gehäuseoberteil und Gehäuseunterteil nur durch Zerstörung des Kennzeichnungsrings möglich ist.

Eine bevorzugte Ausgestaltung der Erfindung besteht darin, daß der Kragen eine Nut zum Einrasten einer Rastnase des Kennzeichnungsrings aufweist.

Alternativ kann vorgesehen sein, daß der Kennzeichnungsring eine Nut zum Einrasten einer Rastnase des Kragens aufweist.

In beiden Fällen wird zwischen dem Kragen und dem Kennzeichnungsring eine Rastverbindung hergestellt, welche vorzugsweise nicht ohne Zerstörung des Kennzeichnungsrings lösbar ist.

Im Rahmen der Erfindung ist vorgesehen, daß das Gehäuseoberteil und das Gehäuseunterteil miteinander verschraubbar sind.

Eine bevorzugte Ausgestaltung der Erfindung besteht darin, daß der Kennzeichnungsring nach dem rastenden Eingriff drehbar ist.

Dies ist insofern vorteilhaft, als beim Einbau des Verbrauchszählers die jeweilige Stellung des Kennzeichnungsrings nicht berücksichtigt werden muß. Um die Kennzeichnung des Verbrauchszählers erfassen zu können, kann der Kennzeichnungsring einfach zum Betrachter hin gedreht werden.

Nachfolgend wird ein Ausführungsbeispiel der Erfindung anhand von Zeichnungen näher erläutert.

Es zeigen
- Fig. 1: einen erfindungsgemäßen Verbrauchszähler vor dem Aufbringen des Kennzeichnungsrings,
- Fig. 2: einen erfindungsgemäßen Verbrauchszähler nach dem Aufbringen des Kennzeichnungsrings und
- Fig. 3: eine geschnittene Darstellung der Verbindungsstelle zwischen dem Gehäuseoberteil und dem Gehäuseunterteil.

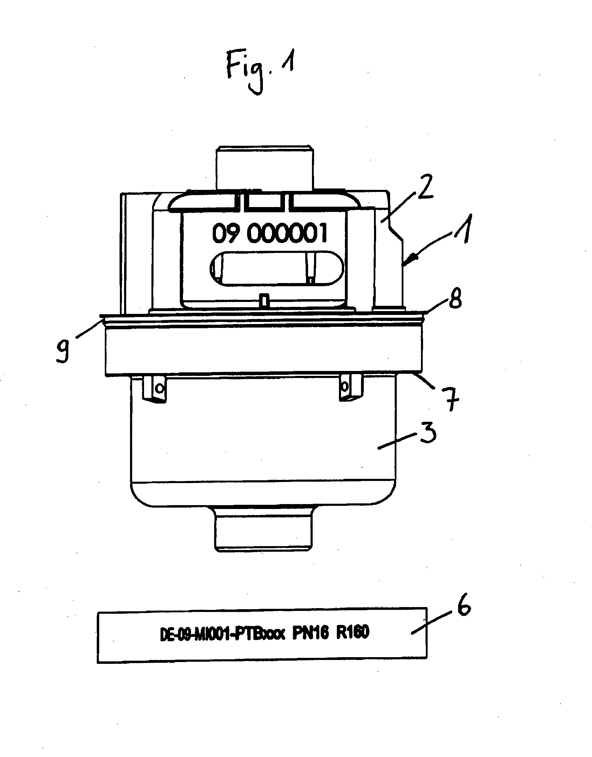

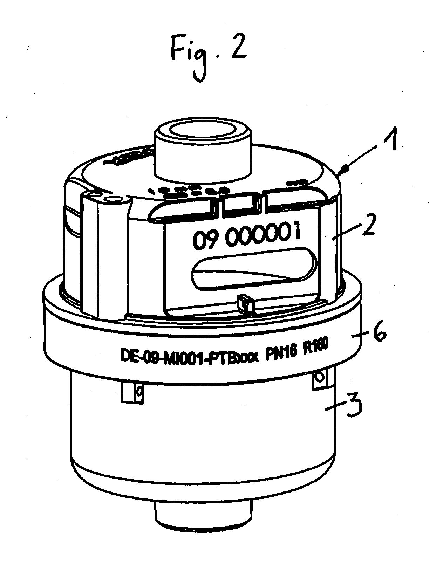

Wie aus den Fig. 1 bis 3 ersichtlich, weist der erfindungsgemäße Verbrauchszähler 1 ein Gehäuseoberteil 2 und ein Gehäuseunterteil 3 auf, die beispielsweise aus Kunststoff oder aus Messing bestehen können. Das Gehäuseoberteil 2 und das Gehäuseunterteil 3 können beispielsweise durch Verschrauben miteinander verbunden werden und dienen zum Schutz der darin angeordneten Meß- und Anzeigeeinheit. Im vorliegenden Beispiel weist das Gehäuseoberteil 2 ein Außengewinde 4 auf, das mit einem Innengewinde 5 des Gehäuseunterteils 3 verschraubt werden kann.

Weiterhin ist ein Kennzeichnungsring 6 vorgesehen, welcher beispielsweise aus Kunststoff oder Messing besteht und der zählerspezifische Kennzeichnungen trägt, die dauerhaft in den Kennzeichnungsring 6 eingebracht sind, beispielsweise durch Gravur (insbesondere Lasergravur), Einstanzen oder Etikettieren mit einem Etikett, das beim Ablösen zerstört wird. Der Kennzeichnungsring 6 wird über das Gehäuseunterteil 3 geschoben, bis er formschlüssig an dem vorstehenden Bund 7 des Unterteils anliegt. Der Kennzeichnungsring 6 kann auch in sonstiger Weise mit dem Gehäuseunterteil verbunden sein.

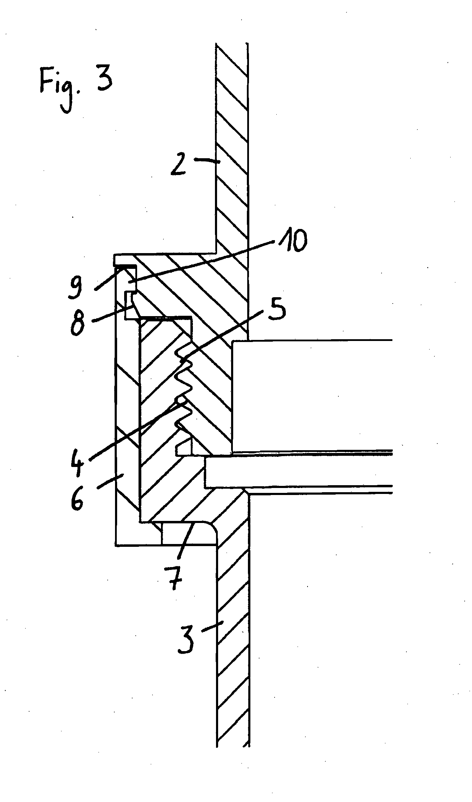

Wie aus Fig. 3 ersichtlich, weist im vorliegenden Ausführungsbeispiel das Gehäuseoberteil 2 oberhalb des Außengewindes 4 einen Kragen 8 auf, der mit einer umlaufenden Nut 9 versehen ist.

In die umlaufende Nut 9 greift eine Rastnase 10 des Kennzeichnungsrings 6 ein, so daß eine ohne Zerstörung des Kennzeichnungsrings 6 nicht lösbare Verbindung zwischen dem Gehäuseoberteil 2 und dem Gehäuseunterteil 3 entsteht.

## Patentansprüche

1. Verbrauchszähler (1) für flüssige oder gasförmige Medien, der ein Gehäuseoberteil (2) und ein damit verbundenes Gehäuseunterteil (3) aufweist, wobei dem Verbrauchszähler (1) eine individuelle, gerätespezifische Kennzeichnung zugeordnet ist und an dem Verbrauchszähler (1) ein die Kennzeichnung tragender, ursprünglich separater, unlösbar bzw. gegen ein nachträgliches unbeabsichtigtes Entfernen gesichert von außen am fertig montierten Verbrauchszähler (1) über eine schnappbare Formschlußverbindung befestigter Kennzeichnungsring (6) angeordnet ist, **dadurch gekennzeichnet, daß** das Gehäuseoberteil (2) einen umlaufenden Kragen (8) aufweist, in welchen der über das Gehäuseunterteil (3) geschobene und an diesem formschlüssig anliegende Kennzeichnungsring (6) eingerastet ist.

2. Verbrauchszähler (1) für flüssige oder gasförmige Medien, der ein Gehäuseoberteil (2) und ein damit verbundenes Gehäuseunterteil (3) aufweist, wobei dem Verbrauchszähler (1) eine individuelle, gerätespezifische Kennzeichnung zugeordnet ist und an dem Verbrauchszähler (1) ein die Kennzeichnung tragender, ursprünglich separater, unlösbar bzw. gegen ein nachträgliches unbeabsichtigtes Entfernen gesichert von außen am fertig montierten Verbrauchszähler (1) über eine schnappbare Formschlußverbindung befestigtes Kennzeichnungsring (6) angeordnet ist, **dadurch gekennzeichnet, daß** das Gehäuseunterteil (3) einen umlaufenden Kragen (8) aufweist, in welchen der über das Gehäuseoberteil (2) geschobene und an diesem formschlüssig anliegende Kennzeichnungsring (6) eingerastet ist.

3. Verbrauchszähler (1) gemäß Anspruch 1 oder Anspruch 2, **dadurch gekennzeichnet, daß** der Kragen (8) eine Nut (9) zum Einrasten einer Rastnase (10) des Kennzeichnungsrings (6) aufweist.

4. Verbrauchszähler (1) gemäß Anspruch 1 oder Anspruch 2, **dadurch gekennzeichnet, daß** der Kennzeichnungsring (6) eine Nut (9) zum Einrasten einer Rastnase (10) des Kragens (8) aufweist.

5. Verbrauchszähler (1) gemäß Anspruch 1 oder Anspruch 2, **dadurch gekennzeichnet, daß** das Gehäuseoberteil (2) und das Gehäuseunterteil (3) miteinander verschraubt sind.

6. Verbrauchszähler (1) gemäß Anspruch 1 oder Anspruch 2, **dadurch gekennzeichnet, daß** der Kennzeichnungsring (6) nach dem rastenden Eingriff drehbar ist.

## Claims

1. Utility meter (1) for liquid or gaseous media, comprising an upper housing component (2) and, connected thereto, a lower housing component (3), the utility meter (1) having an individual, device-specific identification assigned to it and an originally separate identification ring (6), which bears the identification, being fastened non-detachably, or secured against subsequent unintentional removal, to the fully installed utility meter (1) from the exterior by way of a snap-in form fit connection, **characterised in that** the upper housing component (2) has a peripheral collar (8) to which the identification ring (6), having been pushed over the lower housing component (3) and being in form-fit contact therewith, is latched.

2. Utility meter (1) for liquid or gaseous media, comprising an upper housing component (2) and, connected thereto, a lower housing component (3), the utility meter (1) having an individual, device-specific identification assigned to it and an originally separate identification ring (6), which bears the identification, being fastened non-detachably, or secured against subsequent unintentional removal, to the fully installed utility meter (1) from the exterior by way of a snap-in form fit connection, **characterised in that** the lower housing component (3) has a peripheral collar (8) to which the identification ring (6), having been pushed over the upper housing component (2) and being in form-fit contact therewith, is latched.

3. Utility meter (1) according to claim 1 or claim 2, **characterised in that** the collar (8) has a groove (9) for latching engagement with a latch (10) on the identification ring (6).

4. Utility meter (1) according to claim 1 or claim 2, **characterised in that** the identification ring (6) has a groove (9) for latching engagement with a latch (10) on the collar (8).

5. Utility meter (1) according to claim 1 or claim 2, **characterised in that** the upper housing component (2) and the lower housing component (3) are screwed together.

6. Utility meter (1) according to claim 1 or claim 2, **characterised in that,** after latching, the identification ring (6) is rotatable.

## Revendications

1. Compteur de consommation (1) pour milieux liquides ou gazeux, qui présente une partie supérieure de boîtier (2) et une partie inférieure de boîtier (3) reliée à celle-ci, une marque d'identification individuelle et spécifique à l'appareil étant attribuée au compteur de consommation (1), et un anneau d'identification (6) portant la marque d'identification, initialement séparé, étant fixé au compteur de consommation (1), depuis l'extérieur sur le compteur de consommation entièrement monté, au moyen d'une liaison par engagement positif mutuelle par encliquetage de sorte à ne pas pouvoir être enlevé ou à être sécurisé contre un enlèvement involontaire postérieur, **caractérisé en ce que** la partie supérieure de boîtier (2) présente un collet (8) périphérique dans lequel s'encliquette l'anneau d'identification (6) enfilé par-dessus la partie inférieure de boîtier (3) et le touchant par emboîtement de forme.

2. Compteur de consommation (1) pour milieux liquides ou gazeux, qui présente une partie supérieure de boîtier (2) et une partie inférieure de boîtier (3) reliée à celle-ci, une marque d'identification individuelle et spécifique à l'appareil étant attribuée au compteur de consommation (1), et un anneau d'identification (6) portant la marque d'identification, initialement séparé, étant fixé au compteur de consommation (1), depuis l'extérieur sur le compteur de consommation entièrement monté, au moyen d'une liaison par engagement positif mutuelle par encliquetage de sorte à ne pas pouvoir être enlevé ou à être sécurisé contre un enlèvement involontaire postérieur, **caractérisé en ce que** la partie inférieure de boîtier (3) présente un collet (8) périphérique dans lequel s'encliquette l'anneau d'identification (6) enfilé par-dessus la partie supérieure de boîtier (2) et le touchant par emboîtement de forme.

3. Compteur de consommation (1) selon la revendication 1 ou 2, **caractérisé en ce que** le collet (8) présente une gorge (9) pour l'encliquetage d'un ergot d'encliquetage (10) de l'anneau d'identification (6).

4. Compteur de consommation (1) selon la revendication 1 ou 2, **caractérisé en ce que** l'anneau d'identification (6) présente une gorge (9) pour l'encliquetage d'un ergot d'encliquetage (10) du collet (8).

5. Compteur de consommation (1) selon la revendication 1 ou 2, **caractérisé en ce que** la partie supérieure de boîtier (2) et la partie inférieure de boîtier (3) sont vissées l'une à l'autre.

6. Compteur de consommation (1) selon la revendication 1 ou 2, **caractérisé en ce que** l'anneau d'identification (6) peut être tourné après l'engagement par encliquetage.
